# EUROPÄISCHE PATENTSCHRIFT

(11) **EP 0 835 778 B1**
(45) Veröffentlichungstag und Bekanntmachung des Hinweises auf die Patenterteilung: **25.07.2001**
(21) Anmeldenummer: 97114141.1
(22) Anmeldetag: 16.08.1997
(51) Int. Cl.: B60J 7/14

(54) **Kraftfahrzeug mit einem versenkbaren Dach**
Vehicle with retractable roof
Véhicule avec toit rétractable

(30) Priorität: 12.10.1996 DE 19642154
(43) Veröffentlichungstag der Anmeldung: 15.04.1998
(73) Patentinhaber: Wilhelm Karmann GmbH, D-49084 Osnabrück (DE); Bayerische Motoren Werke Aktiengesellschaft, 80788 München (DE)
(72) Erfinder: Russke, Klaus, 49143 Bissendorf (DE)
(74) Vertreter: Busse & Busse Patentanwälte

(56) Entgegenhaltungen:
- DE-C- 547 244
- DE-U- 9 307 481
- FR-A- 2 695 080
- US-A- 2 812 975
- US-A- 5 033 789

## Beschreibung

Die Erfindung betrifft ein Kraftfahrzeug mit einem versenkbaren Dach gemäß dem Oberbegriff des Anspruches 1, das in ein vorderes, ein mittleres und ein rückwärtiges Teilstück unterteilt ist.

Bei einem bekannten Kraftfahrzeug dieser Art (gemäß DE-C-547 244) sind das vordere, das mittlere und das hintere Dach-Teilstück jeweils als starre Schale ausgebildet, die über Scharniere verbunden bzw. an der Außenseite der Karosserie abgestützt sind. Bei der Öffnungsbewegung wird das vordere Teilstück gleichsinnig zum hinteren Teilstück über das mittlere Teilstück geklappt, danach diese beiden Teile gemeinsam und gegensinnig in das hintere, als eine winklige Aufnahmeschale geformte, Dach-Teilstück hineingeklappt und danach erfolgt die gemeinsame Ablage der Teile von Hand in einem äußeren Verdeckkoffer, in dem die Teile geschützt abgedeckt werden. Diese für ungeübte Benutzer schwierige und zeitaufwendige Klappung und Sicherung der Dach-Teilstücke erfordert einen nachteilig großen Ablageraum.

Der Erfindung liegt die Aufgabe zugrunde, ein Kraftfahrzeug der eingangs genannten Art so auszubilden, daß das auch für ein viersitziges Fahrzeug geeignete dreiteilige Dach mit konstruktiv einfachen Mitteln automatisch in einem engen Bewegungsraum steuerbar ist, die Anwendung einer fest eingebauten Heckscheibe erleichtert und in Öffnungsstellung eine raumsparende und geschützte Ablage ermöglicht.

Die Erfindung löst diese Aufgabe mit einer Dachkonstruktion mit den Merkmalen des Anspruches 1. Hinsichtlich wesentlicher weiterer Ausgestaltungsmerkmale wird auf die Ansprüche 2 bis 12 verwiesen.

Das erfindungsgemäß ausgebildete Kraftfahrzeug weist eine dreiteilige, insgesamt starre Dachkonstruktion auf, deren Dach-Teilstücke bei einer Verlagerung in Öffnungsstellung zum Verdeckkasten hin auf einer engen Bewegungsbahn zwangsgesteuert so verschwenkt werden, daß die beiden vorderen Dachteilstücke in eine enge Packlage über das eine feste Heckscheibe aufweisende rückwärtige Dach-Teilstück verlagert werden und danach in einer Einschwenkphase eine raumsparende Positionierung der gesamten Dachkonstruktion im Verdeckkasten erreicht wird.

Die drei starren Dach-Teilstücke werden sowohl bei der Bewegung in die Öffnungsstellung als auch bei Rückbewegungen in die Schließstellung im Bereich der zwischen den Dach-Teilstücken befindlichen Gelenkverbinder derart gesteuert, daß mit wenigen Einzelbauteilen ein geringes Gewicht zu bewegen ist und gleichzeitig über das hintere starre Dach-Teilstück eine hinreichende Stabilität der gesamten Dachkonstruktion sowohl in den jeweiligen Schwenkphasen als auch in der Schließstellung erreicht ist. Das dreiteilige Dach ist dabei insbesondere auch zur Abdeckung eines viersitzigen Fahrzeuginnenraums geeignet.

Weitere Einzelheiten und Vorteile der Erfindung ergeben sich aus der nachfolgenden Beschreibung und den Zeichnungen, die zwei Ausführungsbeispiele des erfindungsgemäßen Kraftfahrzeugs mit versenkbarem Dach veranschaulichen. In der Zeichnung zeigt:
- Fig. 1: eine perspektivische Heckansicht eines Kraftfahrzeugs mit einem drei Dach-Teilstücke aufweisenden Dach in Schließstellung,
- Fig. 2: eine teilweise geschnittene Seitenansicht des Kraftfahrzeugs gemäß Fig. 1,
- Fig. 3 und Fig. 4: jeweilige Ausschnittsdarstellungen des Fahrzeugs mit den Dach-Teilstücken in unterschiedlichen Bewegungsphasen,
- Fig. 5: eine Ausschnittsdarstellung mit den drei Dachteilen in Ablagestellung in einem Verdeckkasten,
- Fig. 6: eine Seitenansicht ähnlich Fig. 2 mit dem rückwärtigen Dach-Teilstück in einer zweiten Ausführungsform,
- Fig. 7: eine Draufsicht des Kraftfahrzeugs gemäß Fig. 1,

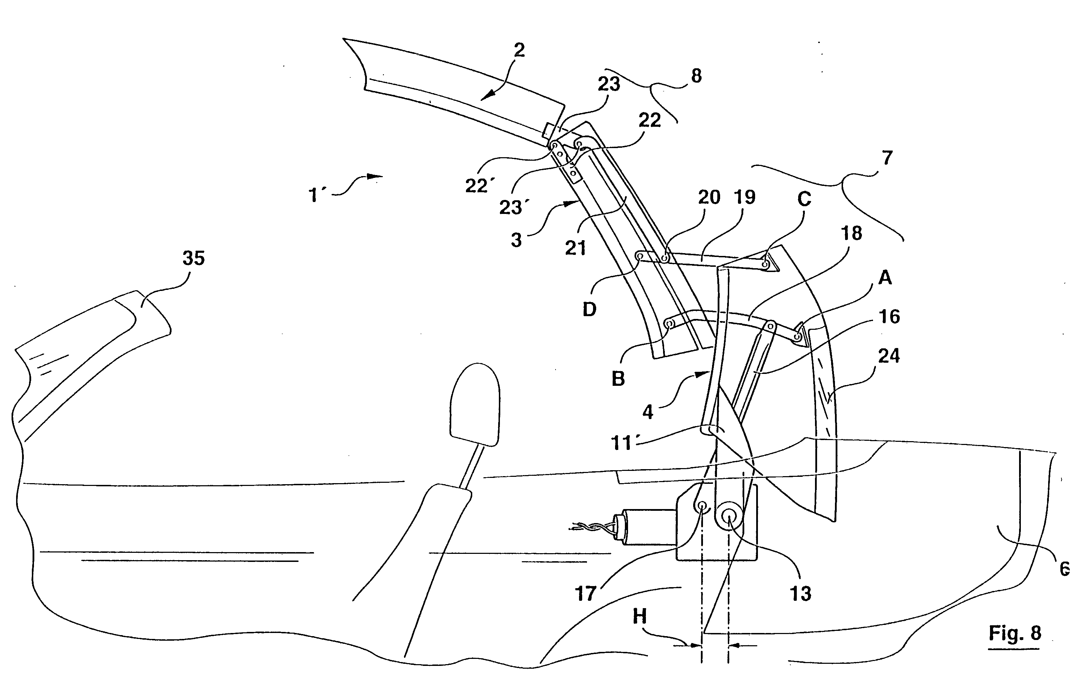

- Fig. 8: eine Seitenansicht ähnlich Fig. 6 mit den drei Dachteilen in einer Schwenkphase, und
- Fig. 9: eine vergrößerte Ausschnittsdarstellung im Bereich des mittleren Dach-Teilstückes gemäß einer Linie IX - IX in Fig. 7.

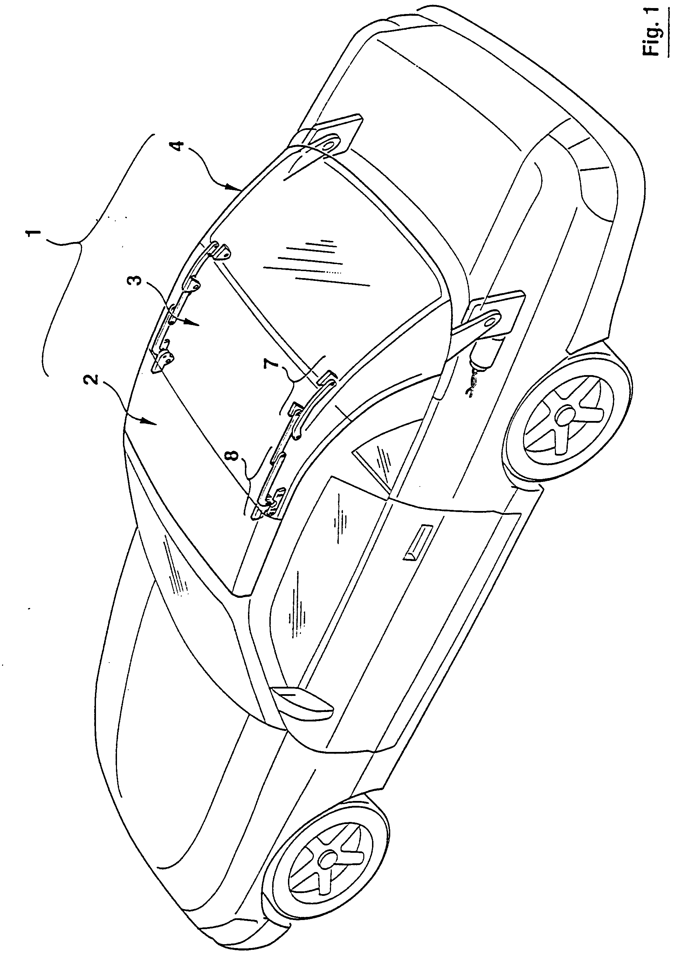

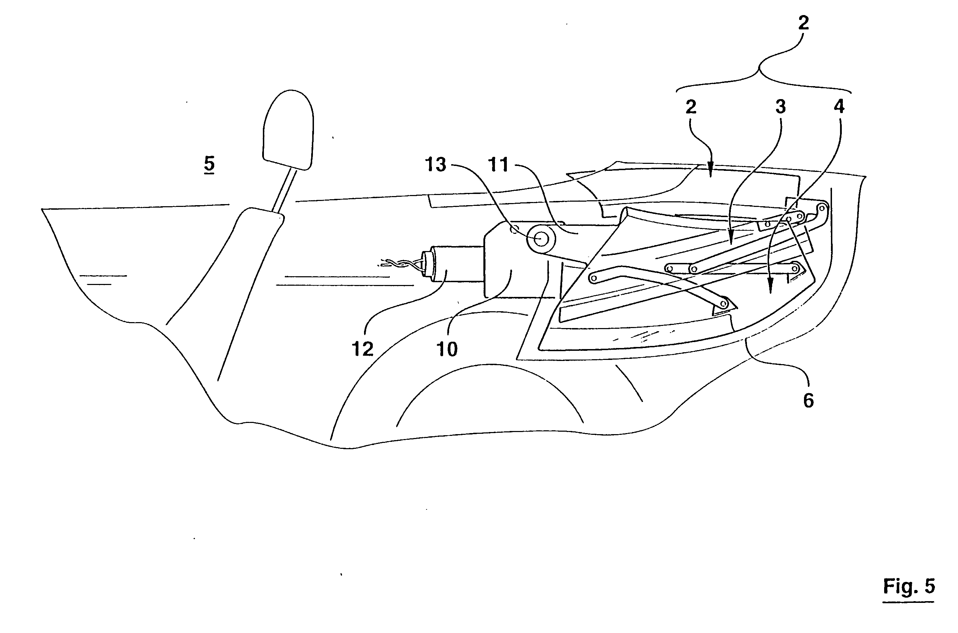

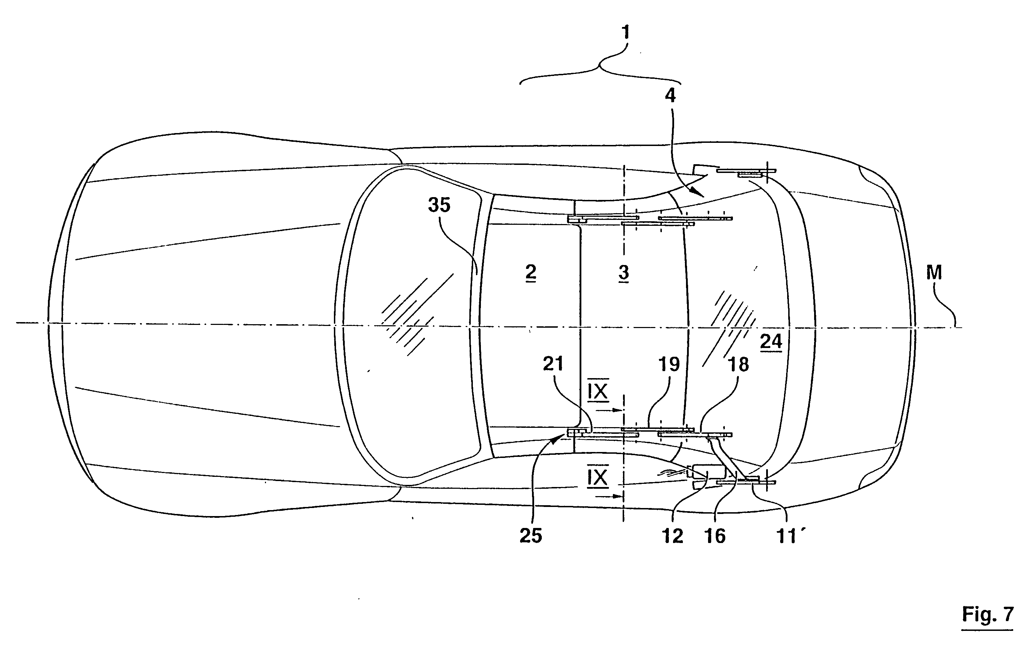

In Fig. 1 ist ein Kraftfahrzeug mit einem insgesamt mit 1 bezeichneten versenkbaren Dach dargestellt, das ein vorderes Teilstück 2, ein mittleres Teilstück 3 und ein rückwärtiges Teilstück 4 aufweist, die gemeinsam aus der dargestellten, den einen Fahrzeuginnenraum 5 überdeckenden Schließstellung in eine Öffnungsstellung unter Ablage in einem heckseitigen Verdeckkasten 6 (Fig. 5) überführbar sind. Die Bauteile für diese Verdeckkinematik sind jeweils randseitig an den Dach-Teilstücken 2, 3, symmetrisch zur Fahrzeuglängsachse M (Fig. 7) angeordnet, so daß damit die nachfolgend für jeweils eine Fahrzeugseite beschriebenen Bauteile mit gegenüberliegenden Teilen korrespondieren.

Das erfindungsgemäß ausgebildete Kraftfahrzeug weist ein Dach 1 auf, dessen vorderes 2, mittleres 3 und rückwärtiges Dach-Teilstück 4 jeweils als eine in sich starre Schale ausgeführt sind, die über zwischenliegende Gelenkverbinder 7, 8 miteinander verbunden sind.

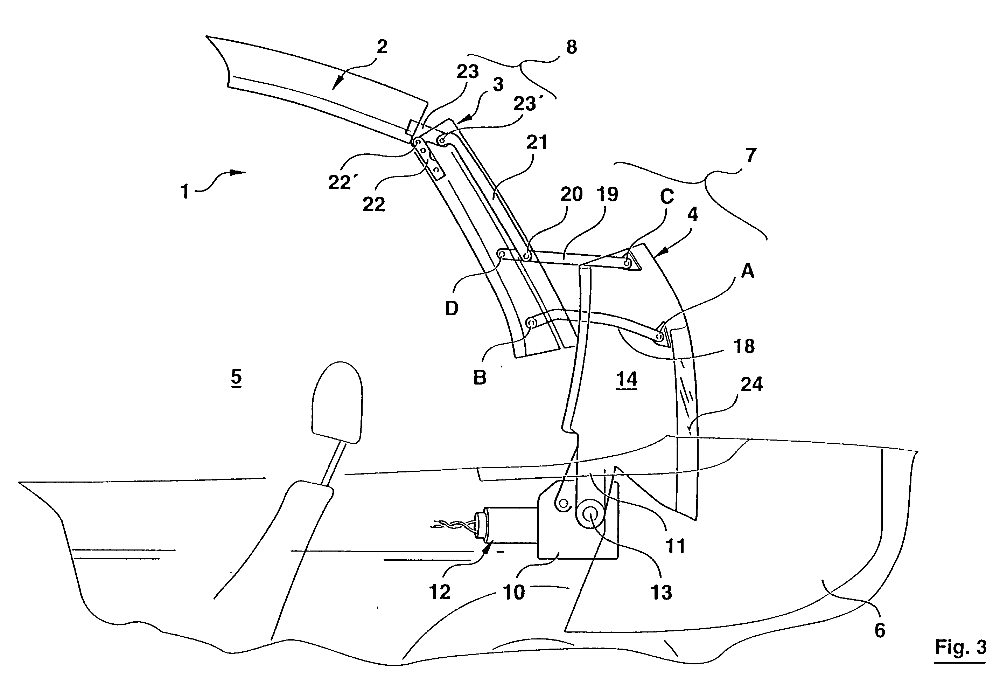

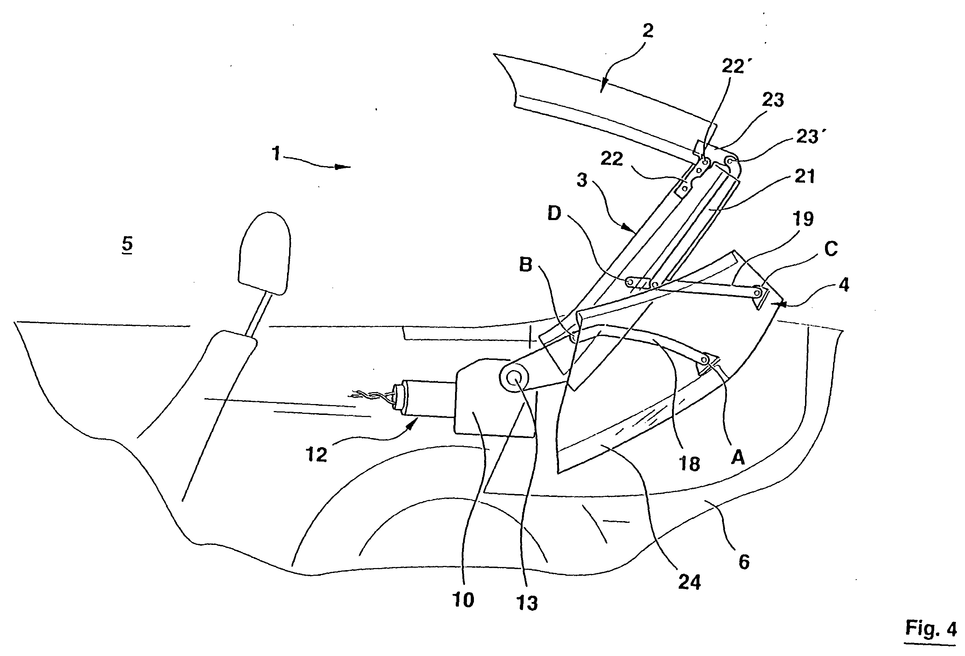

Die unterschiedlichen Bewegungsphasen gemäß Fig. 3 und Fig. 4, mit denen beispielhaft die Verlagerung des Daches 1 zum Verdeckkasten 6 (Fig. 5) hin dargestellt ist, verdeutlicht, daß das mittlere Teilstück 3 einerseits über den ersten Gelenkverbinder 7 gleichsinnig verlagerbar mit dem karosserieseitig an einem Hauptlager 10 gelagerten rückwärtigen Teilstück 4 verbunden ist. Andererseits ist das Vorderteil 2 über den zweiten Gelenkverbinder 8 gegensinnig klappbar zum Mittelteil 3 abgestützt.

Ausgehend von dem rückwärtigen Dach-Teilstück 4, das über einen Stützansatz 11 an dem Hauptlager 10 abgestützt ist, weisen die drei Dach-Teilstücke 2, 3, 4 damit eine Zwangssteuerung auf, wobei diese für die vorbeschriebene Bewegung des Daches 1 zumindest am rückwärtigen Dach-Teilstück 4 mit einem im Bereich des Stützansatzes 11 angreifenden Antriebsorgan 12 versehen sein kann. Mit der Ausbildung der Dach-Teilstücke 2, 3, 4 als starre Schale kann im Bereich eines Schwenklagers 13 über den Stützansatz 11 und einen starren Wandungsbereich 14 des rückwärtigen Dachteiles 4 eine entsprechende Schwenkbewegung mit geringem konstruktivem Aufwand eingeleitet und über die beiden Gelenkverbinder 7, 8 erfolgt zwangsgesteuert eine Bewegungsübertragung auf die beiden Dach-Teilstücke 2 und 3.

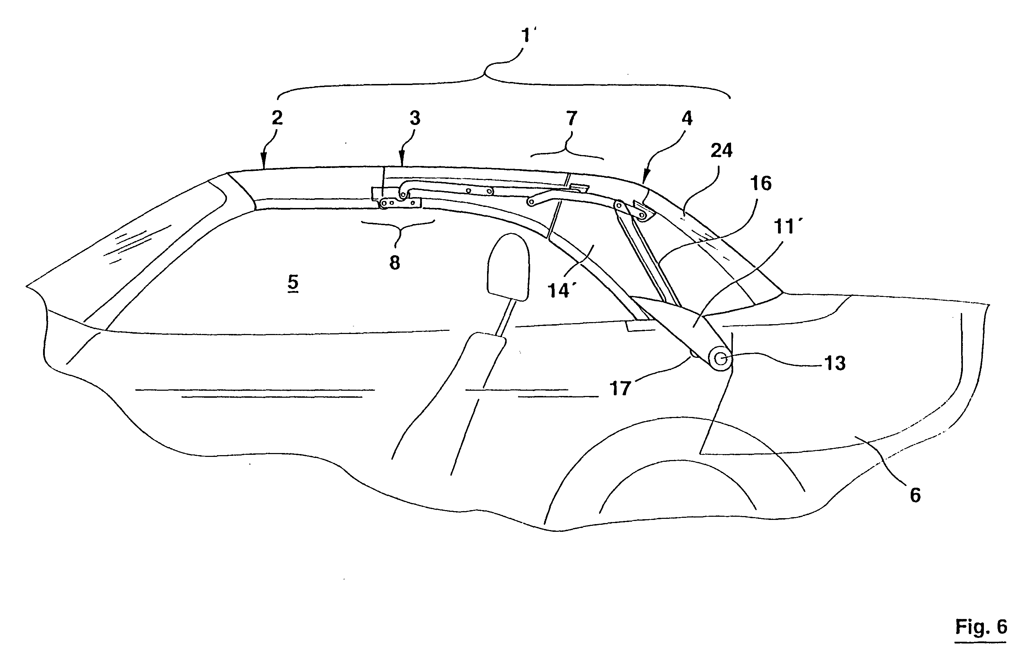

In Fig. 6 ist eine zweite Ausführungsform des Daches 1' veranschaulicht, wobei dieses im Bereich des rückwärtigen Dach-Teilstückes 4' zusätzlich zu dem Stützansatz 11' eine Hauptführungsstange 16 aufweist, die ausgehend vom Bereich des Hauptlagers 10 zum ersten Gelenkverbinder 7 hin gerichtet ist. Die Hauptführungsstange 16 definiert dabei im Bereich des Hauptlagers 10 mit einem Schwenkpunkt 17 zum Schwenklager 13 des rückwärtigen Dach-Teilstückes 4 hin einen Abstand H, so daß die Bewegungseinleitung im Bereich des Stützansatzes 11' mit geringer Verzögerung am Gelenkverbinder 7 wirksam wird und mit den beiden Schwenk-Punkten 13 und 17 die Stabiltität der Dachabstützung im heckseitigen Bereich verbessert ist.

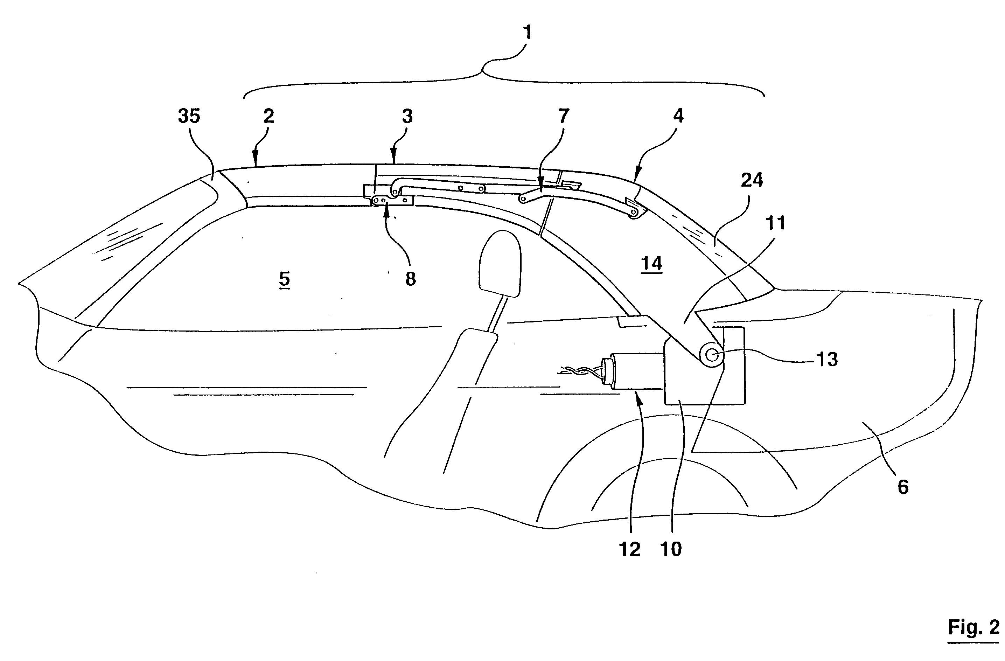

In beiden dargestellten Ausführungsformen des Daches 1, 1' gemäß Fig. 2 bzw. 6 ist der jeweils erste Gelenkverbinder 7 von einem zwei im wesentlichen parallele Steuerstreben 18, 19 aufweisenden Viergelenk A, B, C, D gebildet, wobei in der Ausführungsform gemäß Fig. 6 die antriebsseitige Steuerstrebe 18 mit der Hauptführungsstange 16 verbunden und diese in der Ausführungsform gemäß Fig. 2 entbehrlich ist.

Ausgehend von diesem ersten Gelenkverbinder 7 (Gelenkpunkt 20) ist eine zum Bereich des zweiten Gelenkverbinders 8 verlaufende Schwingstange 21 vorgesehen, die vorderseitig an einem das vordere Dach-Teilstück 2 tragenden und am mittleren Dach-Teilstück 3 über ein Verbindungsglied 22 angelenkten Klapphebelteil 23 angreift. Die Schwingstange 21 ist dabei in zweckmäßiger Ausführung einerseits an der vorderen Steuerstrebe 19 des Viergelenkes A, B, C, D im Nahbereich zu dessen Gelenkpunkt D angelenkt und andererseits bilden ein Gelenkpunkt 23' und 22' die Verbindung mit dem Glied 22.

In Fig. 7 sind die Steuerbaugruppen zwischen den drei Dachteilen 2, 3, 4 in einer Draufsicht veranschaulicht, wobei deren raumsparende Anordnung deutlich wird, die im rückwärtigen Dach-Teilstück 4 die Ausbildung einer vorteilhaft großflächigen Heckscheibe 24 ermöglicht.

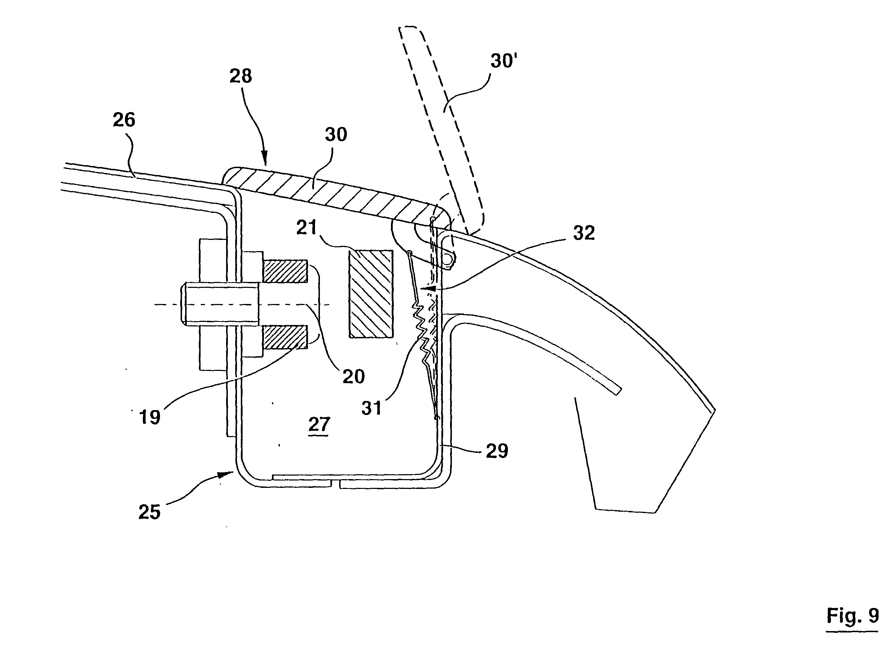

Die Zusammenschau von Fig. 7 und Fig. 9 verdeutlicht, daß zumindest das mittlere Dach-Teilstück 3 mit einem sich in Fahrzeuglängsrichtung zwischen den beiden Gelenkverbindern 7 und 8 erstreckenden und die Bauteile der beiden Gelenkverbindungen zumindest teilweise aufnehmenden Aufnahmeprofil 25 versehen ist. Die Schnittdarstellung gemäß Fig. 9 zeigt dabei, daß das Aufnahmeprofil 25 in zweckmäßiger Ausführung als ein von der Dachfläche 26 abgesenkter und nach oben offener Längskanal 27 ausgebildet ist.

Der Längskanal 27 ist mit einem Abdeckteil 28 verschließbar ausgebildet, wobei dieses als eine im Bereich der Seitenwandung 29 des Aufnahmeprofils 25 abgestützte und zumindest bereichsweise schwenkbare Klappleiste 30 vorgesehen sein kann. In Fig. 9 ist über eine Strichdarstellung verdeutlicht, daß die Klappleiste 30 aus ihrer Schließstellung in eine Öffnungsstellung 30' schwenkbar (beispielsweise bei Bewegung der Steuerstrebe 19 - Fig. 3) und über ein von einer Feder 31 gebildetes Rückstellorgan 32 in die Schließstellung rückführbar ist. Ebenso ist denkbar, das Aufnahmeprofil 25 im Bereich seiner Öffnung mit einem nicht dargestellten Klemm-Abdeckteil oder dgl. zu verschließen, das beispielsweise vor dem Öffnen des Daches 1, 1' bzw. nach dessen wiederholtem Schließen von Hand in das Aufnahmeprofil 25 gelöst bzw. eingerastet wird.

Mit der vorbeschriebenen Verdeckkinematik ist die automatische Überführung des Daches 1, 1' in den Verdeckkasten 6 (Fig. 2 bis Fig. 5) mit einem materialschonenden Bewegungsablauf möglich, wobei in einer ersten Bewegungsphase über den Stützansatz 11, 11' das rückwärtige Dach-Teilstück 4 so geschwenkt wird, daß über den starren Wandungsteil 14 bzw. die Hauptführungsstange 16 zumindest phasenweise eine Zugbewegung in die Dach-Teilstücke 3 und 2 eingeleitet werden kann. Damit kann in dieser Bewegungsphase ein Lösevorgang des vorderen Dachteiles 2 im Bereich eines Windschutzschreibenrahmens 35 erfolgen und danach werden die beiden Dach-Teilstücke 2 und 3 gemeinsam weiterbewegt, wobei das mittlere Dach-Teilstück 3 im wesentlichen parallel mit dem rückwärtigen Dach-Teilstück 4 geschwenkt wird und synchron dazu das vordere Dach-Teilstück 3 die dargestellte Klappbewegung ausführt. Nach dem Ablegen des Daches 1, 1' im Verdeckkasten 6 wird dieser in zweckmäßiger Ausführung mit einem Verdeckkastendeckel (nicht dargestellt) verschlossen.

## Patentansprüche

1. Kraftfahrzeug mit einem versenkbaren Dach (1; 1'), das in ein vorderes, ein mittleres und ein rückwärtiges Teilstück (2, 3, 4) unterteilt ist, die aus einer gemeinsamen, den Fahrzeuginnenraum (5) überdeckenden Schließstellung in eine Öffnungsstellung unter Ablage in einem heckseitigen Verdeckkasten (6) überführbar sind, wobei das vordere (2), das mittlere (3) und das rückwärtige Dach-Teilstück (4) als jeweilige starre Schale ausgeführt und über Gelenkverbinder (7, 8) miteinander verbunden sind, **dadurch gekennzeichnet,** daß das rückwärtige Dach-Teilstück (4) über einen Stützansatz (11; 11') schwenkbeweglich an einem karosserieseitigen Hauptlager (10) abgestützt ist, an diesem ein im Bereich des Stützansatzes (11) angreifendes Antriebsorgan (12) vorgesehen ist und die drei Dach-Teilstücke (2, 3, 4) zwangsgesteuert sind, derart, daß das einerseits über einen ersten Gelenkverbinder (7) gleichsinnig verlagerbar mit dem rückwärtigen Teilstück (4) verbundene mittlere Teilstück (3) andererseits über einen zweiten Gelenkverbinder (8) das gegensinnig klappbare vordere Teilstück (2) abstützt.

2. Kraftfahrzeug nach Anspruch 1, dadurch gekennzeichnet, daß im Bereich des Hauptlagers (10) eine zum ersten Gelenkverbinder (7) hin gerichtete Hauptführungsstange (16) schwenkbar abgestützt ist.

3. Kraftfahrzeug nach Anspruch 2, dadurch gekennzeichnet, daß die Hauptführungsstange (16) im Bereich des Hauptlagers (10) einen zum Schwenklager (13) des rückwärtigen Dach-Teilstücks (4) mit einem Abstand (H) angeordneten Schwenkpunkt (17) aufweist.

4. Kraftfahrzeug nach einem der Ansprüche 1 bis 3, dadurch gekennzeichnet, daß der erste Gelenkverbinder (7) von einem zwei im wesentlichen parallele Steuerstreben (18, 19) aufweisenden Viergelenk (A, B, C, D) gebildet ist.

5. Kraftfahrzeug nach Anspruch 4, dadurch gekennzeichnet, daß die antriebsseitige Steuerstrebe (18) mit der Hauptführungsstange (16) verbunden ist.

6. Kraftfahrzeug nach einem der Ansprüche 1 bis 5, dadurch gekennzeichnet, daß ausgehend vom ersten Gelenkverbinder (7) eine zum Bereich des zweiten Gelenkverbinders (8) verlaufende Schwingstange (21) vorgesehen ist, und diese an einem das vordere Dach-Teilstück (2) tragenden und an der Schwingstange (21) angelenkten Klapphebelteil (23) angreift.

7. Kraftfahrzeug nach Anspruch 6, dadurch gekennzeichnet, daß die Schwingstange (21) an einer der beiden Steuerstreben (18, 19) angelenkt ist.

8. Kraftfahrzeug nach einem der Ansprüche 1 bis 7, dadurch gekennzeichnet, daß das mittlere Dach-Teilstück (3) mit einem sich in Fahrzeuglängsrichtung zwischen den beiden Gelenkverbindern (7, 8) erstreckenden und jeweilige Bauteile der Gelenkverbinder (7, 8) zumindest teilweise aufnehmenden Aufnahmeprofil (25) versehen ist.

9. Kraftfahrzeug nach Anspruch 8, dadurch gekennzeichnet, daß das Aufnahmeprofil (25) als ein von der Dachfläche (26) abgesenkter und nach oben offener Längskanal (27) ausgebildet ist und in diesem die Schwingstange (21) verläuft.

10. Kraftfahrzeug nach Anspruch 8 oder 9, dadurch gekennzeichnet, daß das Aufnahmeprofil (25) mit einem Abdeckteil (28) verschließbar ist.

11. Kraftfahrzeug nach einem der Ansprüche 8 bis 10, dadurch gekennzeichnet, daß als Abdeckteil (28) eine im Bereich der Seitenwandung (29) des Aufnahmeprofils (25) abgestützte Klappleiste (30) vorgesehen ist.

12. Kraftfahrzeug nach Anspruch 11, dadurch gekennzeichnet, daß die Klappleiste (30) über die im Längskanal (27) befindlichen Bauteile (21) der Gelenkverbinder (7, 8) in Öffnungsstellung verbringbar und über ein Rückstellorgan (32) in die Schließstellung rückführbar ist.

## Claims

1. A motor vehicle with a retractable roof (1, 1') which is sub-divided into a front, a middle and a rear part (2, 3, 4) and which can be moved out of a jointly closed position in which they cover the interior (5) of the vehicle into an open position in which they are stowed in a rear covered compartment (6), whereby the front (2), the middle (3) and the rear roof part (4) are constructed as respectively rigid shells and are connected to one another by articulating joints (7, 8), characterised in that via a supporting member (11, 11'), the rear roof part (4) is adapted for pivoting movement and is supported on a main bearing (10) rigid with the body which, in the region of the supporting member (11), is engaged by a drive means (12), the three roof parts (2, 3, 4) being positively controlled in such a way that the middle part (3) which is on the one hand connected via a first articulating joint (7) for equidirectional movement and which is connected to the rear part (4) does on the other hand support the oppositely foldable front part (2) via a second articulating joint (8).

2. A motor vehicle according to claim 1, characterised in that a main guide rod (16) is supported for pivoting movement in the region of the main bearing (10) in the direction of the first articulating joint (7).

3. A motor vehicle according to claim 2, characterised in that the main guide rod (16) has in the region of the main bearing (10) a pivot point (17) which is disposed at a distance (H) from the pivot bearing (13) of the rear roof part (4).

4. A motor vehicle according to one of claims 1 to 3, characterised in that the first articulating joint (7) is constituted by a four bar linkage (A, B, C, D) comprising two substantially parallel control struts (18, 19).

5. A motor vehicle according to claim 4, characterised in that the control strut (18) on the drive side is connected to the main guide rod (16).

6. A motor vehicle according to one of claims 1 to 5, characterised in that starting from the first articulating joint (7) there is extending to the region of the second articulating joint (8) a swinging rod (21) which engages a hinged lever part (23) articulated on the swinging rod (21) and carrying the front roof part (2).

7. A motor vehicle according to claim 6, characterised in that the swinging rod (21) is articulated on one of the two control struts (18, 19).

8. A motor vehicle according to one of claims 1 to 7, characterised in that the middle roof part (3) is provided with, extending in the longitudinal direction of the vehicle between the two articulating joints (7, 8) and at least partially housing the respective components of the articulating joints (7, 8), a receiving profile (25).

9. A motor vehicle according to claim 8, characterised in that the receiving profile (25) is constructed as an upwardly open longitudinal channel (27) which is lowered from the roof surface (26) and in which the swinging rod (21) extends.

10. A motor vehicle according to claim 8 or 9, characterised in that the receiving profile (25) can be closed by a cover part (28).

11. A motor vehicle according to one of claims 8 to 10, characterised in that the cover part (28) provided is a hinged strip (30) supported in the region of the side wall (29) of the receiving profile (25).

12. A motor vehicle according to claim 11, characterised in that the hinged strip (30) can be moved via the components (21) of the articulating joints (7, 8) which are disposed in the longitudinal channel (27) into an open position and returned to the closed position via a restoring means (32).

## Revendications

1. Véhicule automobile avec toit rétractable (1, 1') divisé en trois parties, avant, médiane et arrière (2, 3, 4) qui peuvent, à partir d'une position commune de fermeture où elles recouvrent l'habitacle (5) du véhicule passer à une position d'ouverture où elles sont déposées dans un caisson de capote (6), ces parties avant (2), médiane (3) et arrière (4) étant constituées par des coques rigides reliées par des liaisons articulées (7, 8),
caractérisé en ce que
- la partie arrière de toit (4) est montée basculante par l'intermédiaire d'un appendice de soutien (11 ; 11') sur un palier principal (10) associé à la carrosserie et portant un organe d'entraînement (12) en prise dans la zone de l'appendice (11),
- les trois parties de toit (2, 3, 4) sont commandées impérativement de manière que la partie médiane (3) reliée d'un côté par une première liaison articulée (7) à la partie arrière (4) en pouvant se déplacer toutes deux dans le même sens, soutient de l'autre côté, par une seconde liaison articulée (8), la partie avant (2) pouvant basculer en sens contraire.

2. Véhicule automobile selon la revendication 1,
caractérisé en ce que
dans la zone de palier principal (10) est montée en appui basculant, une tige principale de guidage (16) dirigée vers la première liaison articulée (7).

3. Véhicule automobile selon la revendication 2,
caractérisé en ce que
la tige principale de guidage (16) présente, dans la zone du palier principal (10) un point d'articulation (17) situé à une distance (H) du palier de basculement (13) de la partie arrière de toit (4).

4. Véhicule automobile selon l'une quelconque des revendications 1 à 3,
caractérisé en ce que
la première liaison articulée (7) forme un trapèze à quatre articulations (A, B, C, D) comprenant deux barres de commande (18, 19) essentiellement parallèles.

5. Véhicule automobile selon la revendication 4,
caractérisé en ce que
la barre de commande (18) située du côté de l'entraînement est reliée à la tige principale de guidage (16).

6. Véhicule automobile selon l'une quelconque des revendications 1 à 5,
caractérisé en ce que
partant de la première liaison articulée (7) une tige basculante (21) passe dans la zone de la seconde liaison articulée (8) pour s'accrocher à un levier basculant (23) portant la partie avant de toit (2) et articulé à la tige basculante (21).

7. Véhicule automobile selon la revendication 6,
caractérisé en ce que
la tige basculante (21) est articulée à une des deux barres de commande (18, 19).

8. Véhicule automobile selon l'une quelconque des revendications 1 à 7,
caractérisé en ce que
la partie médiane de toit (3) est équipée d'un profilé (25) disposé selon la direction longitudinale du véhicule entre les deux liaisons articulées (7, 8) et qui accueille au moins en partie les composants de ces liaisons (7, 8).

9. Véhicule automobile selon la revendication 8,
caractérisé en ce que
le profilé d'accueil (25) est constitué par un canal longitudinal (27) descendant de la surface du toit (26), ouvert en haut, et dans lequel se loge la tige basculante (21).

10. Véhicule automobile selon l'une des revendications 8 ou 9,
caractérisé en ce que
le profilé d'accueil (25) peut être obturé par un couvercle (28).

11. Véhicule automobile selon l'une quelconque des revendications 8 à 10,
caractérisé en ce que
le couvercle (28) est formé d'une barrette basculante (30) en appui dans la zone de la paroi latérale (29) du profilé d'accueil (25).

12. Véhicule automobile selon la revendication 11,
caractérisé en ce que
la barrette basculante (30) peut être amenée en position d'ouverture au-dessus des composants (21) des liaisons articulées (7, 8) situés dans le canal longitudinal (27) et peut être ramenée en position de fermeture par un organe de rappel (32).
